# EUROPEAN PATENT APPLICATION

(11) **EP 3 364 219 A2**
(43) Date of publication of application: **22.08.2018**
(21) Application number: 18165979.8
(22) Date of filing: 29.08.2008
(51) Int. Cl.: G01V 5/00

(54) **SCANNING SYSTEMS**

(30) Priority: 31.08.2007 US 969535 P; 28.02.2008 GB 0803646
(62) Divisional of application: 08788456.5
(71) Applicant: Rapiscan Systems, Inc., Torrance, CA 90503 (US)
(72) Inventor: MORTON, Edward James, Guildford, Surrey GU1 2SL (GB)
(74) Representative: Barker Brettell LLP

(57) **Abstract**

A scanning system (10) comprises a radiation source (12) arranged to direct radiation towards an object (14), a detection means (16) arranged to detect the radiation, and control means (18) arranged to control the source so that it produces pulses of radiation, to define a check condition, to process signals from the detection means to determine whether they meet the check condition, and to vary the frequency, the duration and the energy profile of the pulses dependent on whether the signals meet the check condition.

## Description

### Field of the Invention

The present invention relates to scanning systems. It has particular application in scanning systems for cargo, but can also be used in scanners for other applications such as security and medical scanners.

### Background

Conventional cargo inspection systems comprise a radiation source that irradiates with X-rays or gamma-rays through the object under inspection to a sensor array that may be in an arc shape or configured into an "L"-shaped array. Other forms of sensor array will be apparent to the skilled person.

Often, such systems use a linear accelerator to produce X-rays or a radioactive source such as ¹³⁷Cs or ⁶⁰Co to produce gamma-rays.

Linear accelerators are typically operated with beam energies of 2MV to 9MV where a 2MV beam is one that is generated by firing a 2 MeV electron beam at a target, producing a broad spectrum of X-ray energies up to a maximum of 2 MeV but with a typical 1/3 of peak energy. This high-energy X-ray beam can penetrate large objects such as full containers or complete trucks.

Radioactive sources are often used in lower cost installations with a lower radiation penetration requirement. For example, they might be used for screening cars or smaller air-cargo type containers. ¹³⁷Cs provides gamma rays at an energy of 662 keV (more or less equivalent to a 2 MV linear accelerator source) while ⁶⁰Co produces gamma rays at an energy of around 1.2 MeV (more or less equivalent to a 4 MV linear accelerator source).

Previously, linear accelerators have often been fabricated using low frequency S-band microwave energy sources. The waveguide used in the linear accelerator defines the overall size of the finished radiation source. Therefore, such sources are typically bulky and heavy since thick radiation shielding must be installed around the whole accelerating structure.

### Summary of the Invention

The present invention provides a scanning system comprising a radiation source arranged to direct radiation towards an object, detection means arranged to detect the radiation, and control means arranged to control the source so that it produces radiation, and to vary the energy of the radiation, or the frequency of pulses of the radiation, or the duration of pulses of the radiation.

The radiation source may comprise an accelerator arranged to accelerate particles towards a target to generate the radiation. The control means may be arranged to vary the energy, for example the average energy or the energy profile, of the radiation by varying the energy of the accelerated particles.

The control means may be arranged to vary the energy of the radiation in a predetermined pattern. For example the control means may be arranged to process the signals from the detection means generated by the radiation at different energies, and to analyse the relationship between the signals produced by the different energies of radiation thereby to analyse the object.

The control means may be arranged to define a check condition, to process signals from the detection means to determine whether they meet the check condition, and to vary the energy of the radiation dependent on whether the signals meet the check condition.

The present invention further provides a scanning system comprising a radiation source arranged to direct radiation towards an object, a detection means arranged to detect the radiation, and control means arranged to control the source so that it produces pulses of radiation, to define a check condition, to process signals from the detection means to determine whether they meet the check condition, and to vary the pulses dependent on whether the signals meet the check condition.

The control means may be arranged to vary the frequency, or the energy of the pulses.

The processing means may be arranged to produce the radiation pulses at a first energy, and/or a first frequency to analyse the signals produced by each of the pulses and, if the check condition is not met, to produce at least one pulse of a second higher energy and/or frequency.

The check condition may be arranged to be met only if sufficient radiation, for example at least a predetermined amount of radiation, has reached the detection means.

The control means may be arranged to use the check condition to predict, from the signals from a set of pulses, a required energy and/or frequency of a subsequent pulse, and to select the energy and/or frequency of the subsequent pulse or pulses accordingly.

The present invention further provides a scanning system comprising a radiation source arranged to direct radiation towards an object, detection means arranged to detect the radiation, and control means arranged to control the source so that it produces pulses of radiation, and to vary the frequency of the pulses.

The system may further comprise sensing means arranged to sense movement of the object, and the control means may be arranged to vary the frequency of the pulses in response to variation in the speed of the object. The control means may be arranged to vary the frequency of the pulses in direct proportion to the speed of the object. Then if each pulse is arranged to image or scan a layer of the object, the layers will be evenly spaced along the object.

The detection means may include a sensor arranged to produce a sensor signal in response to detection of the radiation, and acquisition means arranged to generate a data signal from the sensor signal, wherein the acquisition means has an adjustable sensitivity which can be adjusted to accommodate signals generated by the pulses of different energies.

The acquisition means may be linked to the radiation source and arranged to adjust its sensitivity in response to changes in the energy of the radiation pulses from the source. The acquisition means may include an integrator having a capacitance which is variable to vary said sensitivity.

The present invention further provides a scanning system comprising a radiation source arranged to direct radiation towards an object, detection means arranged to detect the radiation, wherein the detection means includes a detector arranged to produce a detector signal in response to detection of the radiation and acquisition means including an integrator and arranged to generate a data signal from the sensor signal, control means arranged to control the source and the acquisition means so as to vary the number of pulses over which the integrator integrates the detector signal thereby to vary the sensitivity of the system.

The control means may be arranged to vary said number of pulses by varying the frequency of the pulses, or by varying the time over which the integrator integrates the detector signal.

The present invention is directed in part at the use of compact imaging sources for imaging of cargo items from small containers up to large trucks.

A radioactive source is naturally compact and therefore of smallest possible weight given that the radiation shield must be located all around the radiation source. However, the radiation source may not be switched on and off, requiring a manual shutter for this purpose. Such a shutter may become stuck so posing a potential safety hazard. Further, the transportation of such sources can be problematic, particularly across national borders.

Linear accelerators are convenient but complex radiation sources in that they may be turned on and off simply using electronic means. When the power supply is disconnected, no radiation can be emitted at all. Transportation becomes more straightforward and they are intrinsically safer to operate.

In some embodiments of the present invention, a compact imaging source is built around a linear accelerator that operates at high frequency. High frequency results in low wavelength and so a more compact linear accelerator design is the result. Advantageously, an X-band linear accelerator may be used, or alternatively one with similarly high operating frequency.

To provide best imaging capability, the compact radiation source may be capable of operating in a number of modes.

Embodiments of the present invention will now be described by way of example only with reference to the accompanying drawings, in which:
**Figure 1** schematically shows a scanning system setup according to embodiments of this invention;
**Figure 2** schematically shows a scanning system according to another embodiment of the invention;
**Figure 3** is a flowchart showing a method of scanning an object according to an embodiment of this invention;
**Figure 4** is a flowchart showing a method of scanning an object according to another embodiment of the invention;
**Figure 5** schematically shows two typical scanning system geometries;
**Figure 6** graphically represents the timing of pulses of radiation from a radiation source in an embodiment of this invention;
**Figure 7** graphically represents variation of pulse frequency with object velocity in an embodiment of the invention;
**Figure 8** graphically represents variable energy pulsed radiation according to an embodiment of this invention;
**Figure 9** graphically represents different variable energy pulsed radiation according to another embodiment of the invention;
**Figure 10** schematically shows a switching gain integrator circuit for processing detector signals according to an embodiment of this invention;
**Figure 11** graphically represents collection and integration of detector data over several radiation pulses;
**Figure 12** schematically shows part of a scanning system according to another embodiment;
**Figure 13** schematically shows part of a scanning system according to another embodiment of the invention; and
**Figure 14** graphically represents operation of a threshold check level within an embodiment of the invention.

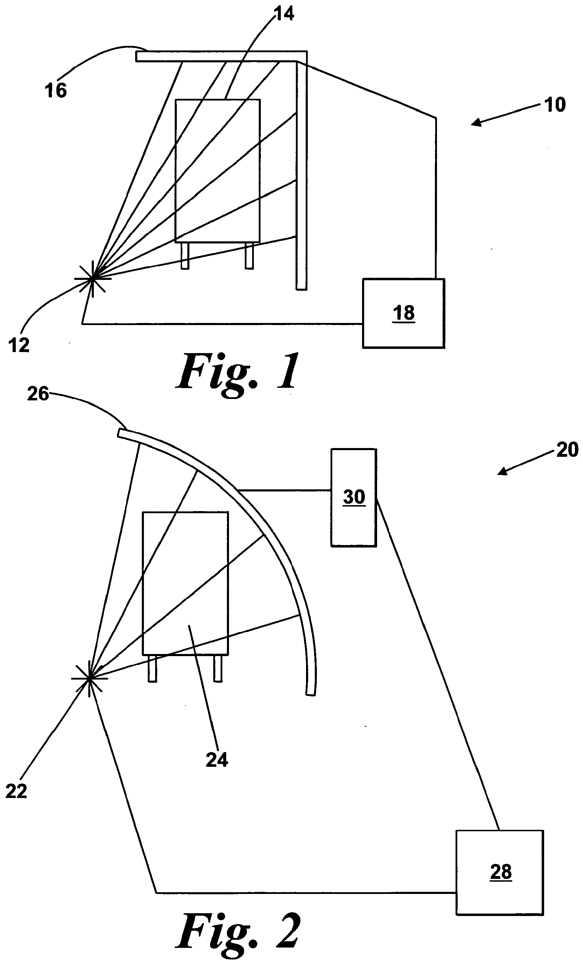

Referring to Figure 1, a scanning system 10 comprises a radiation source 12 arranged to direct radiation towards an object 14 to be scanned. The system 10 also includes a detection means 16 arranged to detect the radiation. In this embodiment the radiation source comprises a linear accelerator of the type previously described. In other embodiments the radiation source may be any other suitable source (for example, a different type of previously described radiation source). In this embodiment the detector means 16 comprises an L-shaped sensor array, which may comprise a plurality of banks of detectors - it will be apparent to the skilled person that other embodiments may make use of different types of detectors. In this embodiment the object 14 being scanned is a lorry. The system 10 also comprises a controller 18 which is arranged to control the radiation source 12 such that the source 12 produces radiation in pulses. The controller 18 is also arranged to define a check condition and to process signals from the detection means 16 in order to determine whether they meet the check condition. The controller 18 varies the pulses of the radiation source 12 dependent upon whether or not the signals from the detection means meet the check condition.

In some embodiments if the check condition is not met, the control means 18 is arranged to vary the frequency of the pulses from the radiation source 12. In some embodiments the control means is arranged to produce the radiation pulses at a first frequency, and then to analyse the signals produced by pulses and, if the check condition is not met, it can produce pulses at a second higher frequency.

In other embodiments, the control means 18 is arranged to vary the energy profile of the pulses. In some such embodiments, the control means 18 controls the radiation source 12 to produce the radiation pulses with a first energy profile, analyses the signals produced by the pulses and, if the check condition is not met, controls the radiation source 12 to produce at least one pulse of a second, higher energy profile.

In other embodiments, the control means 18 is arranged to vary the duration of the pulses. In some such embodiments, the control means 18 controls the radiation source 12 to produce radiation pulses having a first duration, analyses the signals produced by each of the pulses and, if the check condition is not met, controls the source 12 to produce at least one pulse of a second, higher duration. In some embodiments, the check condition is arranged to be met only if enough radiation has reached the detector array, i.e. if enough radiation has not reached the detector array 16, then the check condition is not met and the control means 18 varies at least some subsequent pulses. "Enough radiation" may be at least a predetermined amount of radiation, or sufficient radiation to allow a reliable measurement, or sufficient radiation for the image generated from it to have one or more characteristics making it suitable for analysis. The amount of radiation may be measured over a single pulse, or a predetermined number of pulses, or over a predetermined time. As described above, in some embodiments, when the check condition is not met, radiation is pulsed more frequently, at a higher strength (higher energy) or for longer (for a longer pulse duration). In some embodiments, a combination of these techniques may be used to vary the pulses. If the check condition is still not met after varying the pulses, then the pulses may be varied further until the check condition is met. If the check condition is not met by varying the pulses in one aspect, i.e. by changing one parameter of the pulses (e g by changing the pulse frequency) then the control means 18 may be arranged to vary the pulses in another aspect, i.e. by changing another parameter of the pulses (e g by changing the pulse duration, or the pulse energy profile or in a combination of both).

In further embodiments, the control means 18 is arranged to use the check condition to predict required properties of subsequent pulses. The required properties may be a required energy profile, a required frequency of a subsequent set of pulses, or a required duration of a subsequent pulse or any combination of these. The control means 18 uses detected signals from an earlier set of pulses to determine the required properties for subsequent pulses. The control means 18 then generates the subsequent pulses by controlling the radiation source 12 accordingly. For example the control means 18 may predict the pulse properties necessary in order to provide a reliable measurement.

For example, it may be determined that the signals from a first set of pulses produce an insufficient signal (e g in terms of signal magnitude) at the detector, and so the control means 18 is arranged to predict how the radiation source must be varied in order to produce pulsed radiation sufficient to produce enough radiation to produce sufficiently strong detected signals for a reliable measurement, for example to ensure that sufficient radiation reaches the detectors. The control means 18 then varies the source 12 to generate such subsequent pulses.

In another embodiment, the same system setup as shown in figure 1 is provided. However, in this embodiment the control means 18 is arranged to control the source so that it produces pulses of radiation and to vary the frequency of the pulses. There is no check condition in this example of this embodiment (although it can be used in combination with the check condition of the previous embodiment). In some such embodiments there is also provided a sensing means which is arranged to sense movement of the object such that the control means 18 is arranged to vary the frequency of the pulses in response to variation in the speed of the object. For example, the control means 18 is arranged to control the source 12 to produce higher frequency radiation pulses as the speed of the object 14 through a detection region (in which the source 12 and detector array 16 operate) increases. In this way, sufficient sampling of the object 14 can be obtained whether it is moving relatively quickly or relatively slowly. It may be an object of the invention in some embodiments to provide substantially constant sampling of the object, and the relationship between the frequency of the pulsed radiation and the speed of the object can be controlled by the control means 18 accordingly. In some embodiments the control means 18 is arranged to vary the frequency of the pulses in direct proportion to the speed of the object 14.

Referring to Figure 2, a scanning system 20 according to another embodiment of the invention comprises a radiation source 22 arranged to direct radiation towards an object 24. The system 20 also includes detection means 26 in the form of a detector which produces a detector signal in response to detection of radiation in a similar manner to the embodiment of Figure 1. The system 20 of this embodiment also includes acquisition means 30 comprising an integrator which is arranged to generate a data signal from the signal which is received from the detector (the detector signal). The system 20 also includes control means 28 in communication with both the source 22 and the acquisition means 30. The control means 28 is arranged to control the source 20 and the acquisition means 30 to vary the number of pulses over which the integrator integrates the detector signal - thus allowing variation of the sensitivity of the system 20. Advantageously, if it is deemed necessary by the controller 28, the integrator can be used to generate a data signal which comprises a detector signal relating to more than one pulse of radiation. This may be particularly useful in situations where enough radiation is not detected from a single pulse.

In some embodiments the control means 28 controls the source 22 to vary the frequency of the pulses in order to vary the number of pulses in which the integrator integrates the detector signal. In other embodiments the number of pulses over which the integrator integrates the detector signal is varied by varying the time over which the integrator integrates the detector signal.

In some embodiments the control means 18 is arranged to generate image data which defines images of the object 14 from some signals from the detection means.

A scanning system according to a further embodiment comprises the same system set up as shown in Figure 1 except the control means 18 is arranged to control the source 12 such that it produces pulses of radiation, and to vary the energy of the different pulses of radiation. In some such embodiments, the control means 18 is arranged to vary the energy of the pulses in a predetermined pattern. The signals from the detector 16 which correspond to different pulsed radiation energies are analysed to provide information relating to the object 14. The analysis of the object 14 in this way is possible since the response characteristics of the object are dependent upon the energy of the radiation with which they are being scanned.

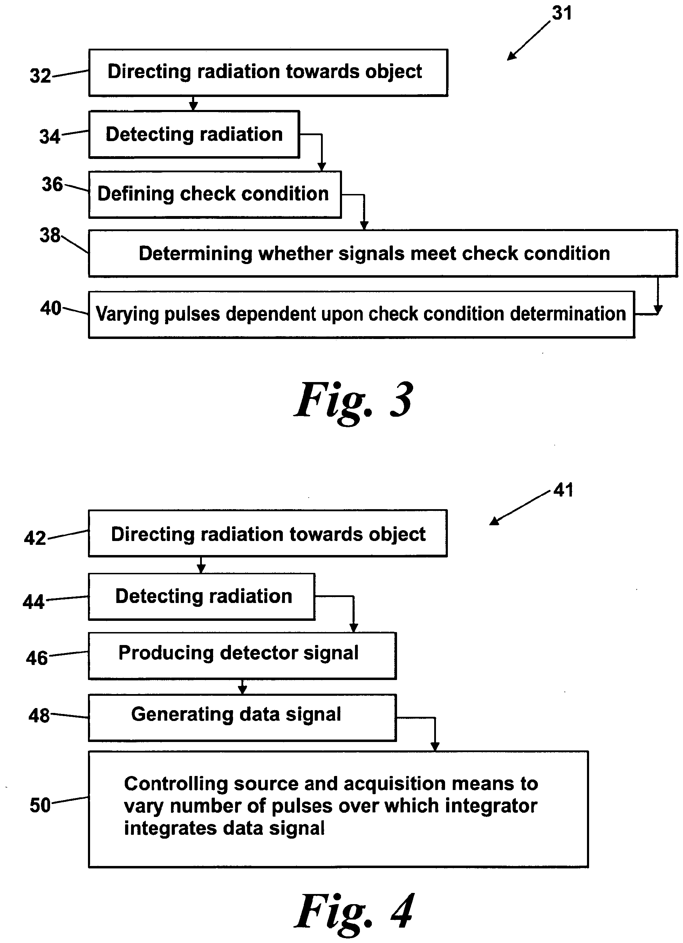

Referring to Figure 3, according to an embodiment of this invention, a method 31 of scanning an object comprises directing 32 radiation towards the object, detecting 34 the radiation and controlling a radiation source which produces pulses of radiation, defining 36 a check condition, determining 38 whether signals from the detector meet the check condition by processing the signals, and varying 40 the pulses dependent on whether the signals meet the check condition. In some embodiments, the check condition may be defined at an initial step. The method steps are not necessarily carried out in the order shown in figure 3.

Referring to Figure 4, according to another embodiment of the invention a method 41 of scanning an object comprises directing 42 radiation towards the object, detecting 44 the radiation using radiation detection means, producing 46 a detector signal in response to detection of the radiation, generating 48 a data signal from the detector signal, and controlling 50 the radiation source and an acquisition means so as to vary the number of pulses over which an integrator integrates the detector signal in order to vary the sensitivity of this system.

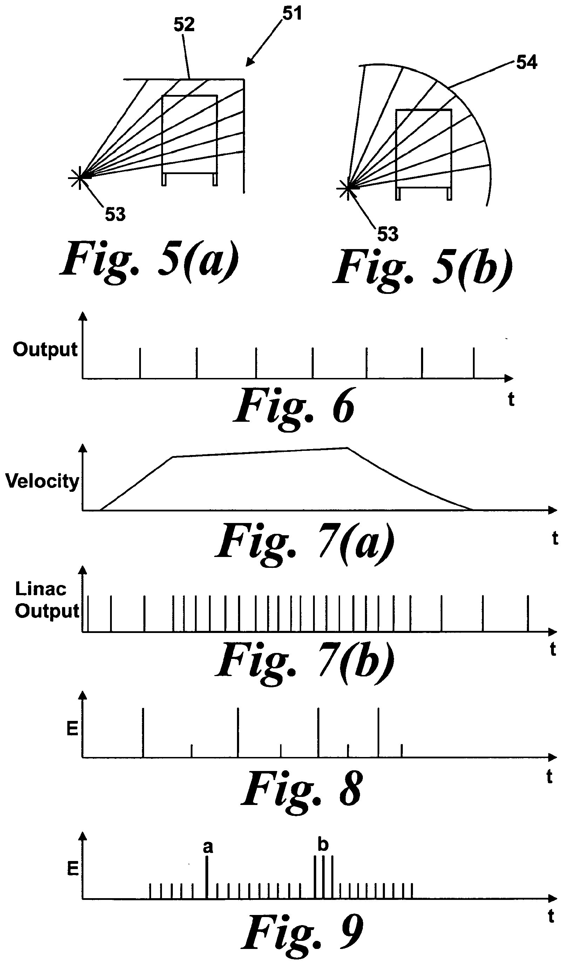

Two typical imaging geometries are shown in figure 5. Figure 5 (a) shows a system 51 configured with an "L"-shaped sensor array 52 with a compact radiation source 53 to the left while figure 5 (b) shows an arc-shaped sensor array 54 with the compact source 53 to the left.

A compact linear-accelerator source will typically run with a pulse configuration as shown in figure 6. Here, each pulse will typically have a pulse width of a few microseconds (1 - 10 µs is typical) with a pulse repetition frequency that is often in the range 50 to 200 Hz.

In some embodiments of the present invention, the compact radiation source is capable of pulse frequency modulation such that the timing of each pulse from the linear accelerator is timed to match the velocity of the object under inspection as it passes through the slice-like radiation beam. A suitable pulse frequency modulation example is shown in figure 7. Figure 7(a) represents the object velocity, whilst Figure 7(b) shows the pulse timing. The pulse frequency increases as the object velocity increases.

In some embodiments, an object of the imaging system is to identify threat materials within the object under inspection. This may be achieved using an operator (such as a human operator) to look for objects within this image. However, it is also possible to provide some materials discrimination by using a variable energy radiation beam. As shown in figure 8, in some embodiments it is possible to pulse the energy of the linear accelerator source to alternate energies, for example a high energy of 6MV and a low energy of 2 MV. In this case, the radiation energy transmitted by the object will be different for the high and low energy pulses (since each material in the beam has a characteristic and energy-varying radiation absorbance). Such variation in energy of the pulses is incorporated with pulse frequency modulation to provide high quality scanning of the object under inspection.

In some embodiments, an objective of the compact cargo inspection system is to minimise the size and weight of the radiation source. The higher the energy of operation of the radiation source, the larger and heavier the source becomes. It can therefore be advantageous to operate the radiation source at the lowest possible energy. However, in some situations, the energy of the radiation source is too low to provide effective penetration through the object under inspection. In this case, the cargo item can be treated as not being properly inspected. Therefore, to address this problem, a pulse sequence as shown in figure 9 is adopted. Here, the majority of pulses are emitted at low energy (say 2 MV). The detector signals are recorded and checked to see if sufficient object penetration has been measured. If not, the radiation source is instructed to emit a high energy pulse at say 6MV (marked (a) in figure 9) in order to provide a set of data with the required penetration. Now, it is possible to resolve the majority of dark alarms (a dark alarm is defined as occurring where insufficient penetration was recorded by the low energy pulse) without providing excessive dose at the external surface of the unit. In some situations (marked (b) in figure 9), it may be necessary to provide several consecutive high energy pulses to get sufficient signal for the transmission measurement.

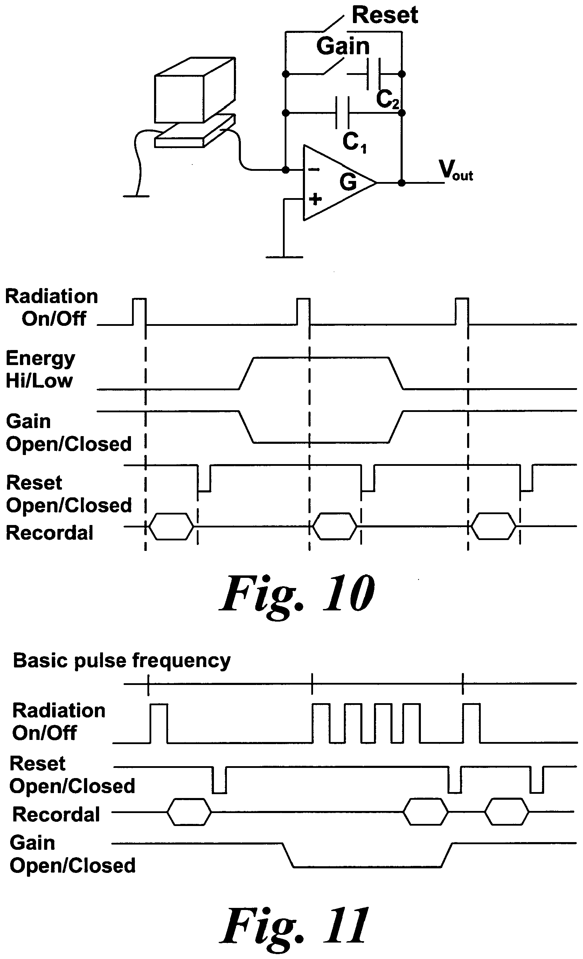

Typically, the high energy pulse will contain more X-ray photons than a low energy pulse. This can place severe demands on the dynamic range and noise of the front-end readout electronics. As shown in figure 10, in some embodiments, a switching gain front end integrator circuit is provided whose operation is linked to the pulse generator for the linear accelerator. In normal operation with low energy pulses from the radiation source, the Gain switch is open and the value of C1 alone determines the gain. For example, if C1 = 3pF, then the output of the integrator with be 1V for a 3pC input charge from the front end photodiode. In high-energy mode the Gain switch is closed and now the total capacitance is equal to C1 + C2. For example, if C2 = 9pF, then the output of the integrator will be 0.25V for a 3pC input charge from the front-end photodiode.

In a further embodiment of this invention, figure 11 shows how the integrator may be held in integrating mode over several radiation pulses. Now, it is possible to acquire a burst containing multiple radiation pulses so that regions in which previously there was a dark alarm can now be resolved with measurable signal. Ideally, the base pulse frequency of the imaging system will be maintained (at say 50 Hz) with the additional pulses being fired within the normal beam off time (say at 400 Hz pulse repetition frequency). In this way, the normal imaging quality is not compromised by the additional measurement. Figure 11 shows the Gain switch being turned to low gain mode during the extra pulse measurement period although it would also be possible to operate in the standard high gain mode for extra sensitivity.

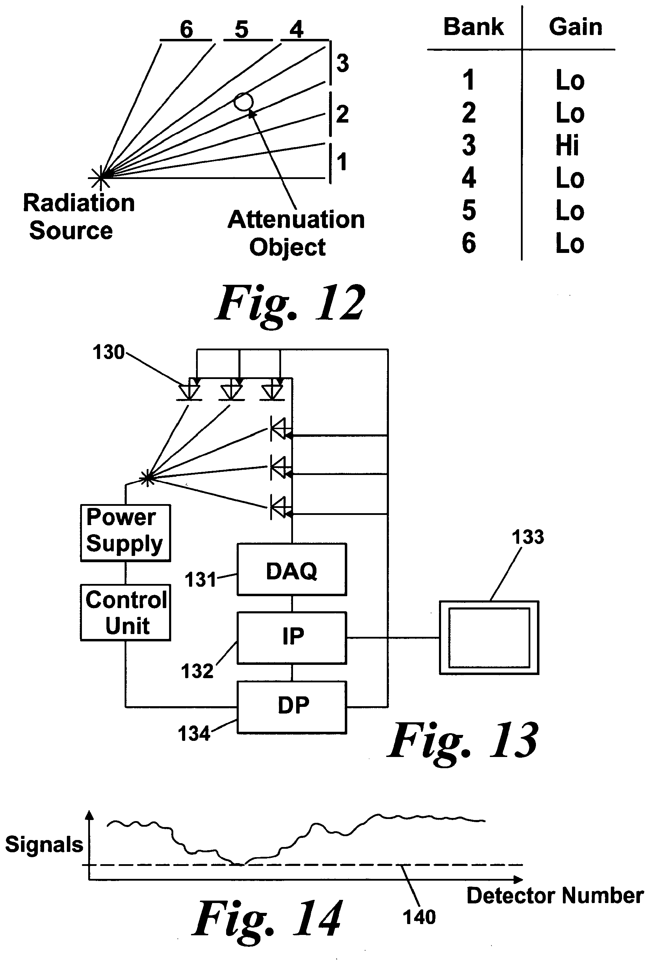

Figure 12 s hows that the gain switch may be operated differently on different detector banks or groups (or different detector portions provided on the same detector in other embodiments) in order to optimise the dynamic range of the X-ray detector system. In this case six detector banks are shown labelled 1-6.

Figure 13 shows an embodiment in which there is provided a system for generating an optimal pulse sequence and gain selection by analysis of the image data itself. Here, programmable gain integrating amplifiers 130 are connected to each bank of detectors. Data from these detectors pass to a data acquisition unit 131 which outputs digital signals to an Image Processing Unit 132 which appends the new data to the to the image data to be displayed as an image on a monitor 133. A Decision Processing Unit reviews the new image and determines whether the new data is outside of the dynamic range of the integrating amplifier. If it is, the Decision Processing Unit 134 will cause the amplifier to continue to integrate and will instruct the radiation source to fire more pulses until the dynamic range required of the measurement has been achieved.

The Decision Processing Unit may use a range of algorithms, but a simple threshold algorithm such as that shown in figure 14 is typically sufficient. If a signal is received below threshold 140, the Decision Processor will instruct the source to provide further pulses. More sophisticated algorithms will use methods such as image segmentation and connected component labelling to identify from one or more 2D image scans the extent of a volume projected into one or more subsequent 2D detected images and to automatically predict when the multiple pulse stream, or higher energy pulses, or longer duration pulses, will be required.

As another method of overcoming dark alarms, where not enough radiation reaches the detectors for a suitable image to be formed, the duration of the pulses can be varied, rather than their energies, in response to analysis of the detected image. In some cases it is advantageous to vary the energy, frequency and duration, or any two of those parameters, together. It will be appreciated that all of these options are ways of varying, or increasing, the average, for example over a period of time including a group of more than one pulse, of the power of the radiation.

It is noted that the radiation shielding can be designed around the low energy pulse requirements since for a very large fraction of time it is this radiation beam that is generated. For the small fraction of time that a high energy beam is required, the instantaneous dose will be somewhat higher. However, dose is calculated in a time averaged fashion and hence if the Decision Processor is restricted in the number of high energy pulses that it can emit (for example, no more than 5% of the time), then radiation dose can be kept to an acceptable level with very moderate radiation shielding requirements.

Various modifications may be made to the present invention without departing from its scope. The skilled person will understand that where the invention refers to variation of radiation pulses in terms of their frequency, duration, or energy profile, it will be possible to vary two of these properties, or perhaps all three in an attempt to achieve the same goal, e.g. to provide a higher detected signal.

## Claims

1. A scanning system comprising a radiation source arranged to direct radiation towards an object, a detection means arranged to detect the radiation, and control means arranged to control the source so that it produces pulses of radiation, to define a check condition, to process signals from the detection means to determine whether they meet the check condition, and to vary the frequency, the duaration and the energy profile of pulses dependent on whether the signals meet the check condition.

2. A scanning system according to claim 1 wherein the control means is arranged to produce the radiation pulses at a first frequency, to analyse the signals produced by the pulses and, if the check condition is not met, to produce a set of pulses at a second higher frequency.

3. A scanning system according to claim 1 or claim 2 wherein the control means is arranged to produce the radiation pulses with a first energy profile, to analyse the signals produced by each of the pulses and, if the check condition is not met, to produce at least one pulse of a second higher energy profile.

4. A scanning system according to any foregoing claim wherein the control means is arranged to produce the radiation pulses at a first duration, to analyse the signals produced by each of the pulses and, if the check condition is not met, to produce at least one pulse of a second higher duration.

5. A scanning system according to any foregoing claim wherein the check condition is arranged to be met only if sufficient radiation has reached the detector array.

6. A scanning system according to any foregoing claim wherein the control means is arranged to use the check condition to predict, from the signals from a set of pulses, a required energy profile of a subsequent pulse, and to generate the subsequent pulse accordingly.

7. A scanning system according to any foregoing claim wherein the control means is arranged to use the check condition to predict from the signals from a set of pulses a required frequency of a subsequent set of pulses, and to select the frequency of the subsequent pulses accordingly.

8. A scanning system according to any foregoing claim wherein the control means is arranged to use the check condition to predict from the signals from a set of pulses a required duration of a subsequent pulse, and to generate the subsequent pulse accordingly.

9. A scanning system comprising a radiation source arranged to direct radiation towards an object, detection means arranged to detect the radiation, and control means arranged to control the source so that it produces pulses of radiation, and to vary the frequency of the pulses.

10. A scanning system according to claim 9 further comprising sensing means arranged to sense movement of the object, wherein the control means is arranged to vary the frequency of the pulses in response to variation in the speed of the object.

11. A scanning system according to claim 10 wherein the control means is arranged to vary the frequency of the pulses in direct proportion to the speed of the object.

12. A system according to any foregoing claim wherein the radiation source comprises an accelerator arranged to accelerate particles towards a target to generate the radiation.

13. A system according to any foregoing claim wherein the control means is arranged to generate image data defining images of the object from signals generated by the detection means.

14. A method of scanning an object comprising directing radiation from a radiation source towards an object, detecting the radiation using detection means, and controlling the source so that it produces pulses of radiation, defining a check condition, processing signals from the detection means to determine whether they meet the check condition, and varying the frequency, the duration, and the energy profile of the pulses dependent on whether the signals meet the check condition.
